# EUROPEAN PATENT SPECIFICATION

(11) **EP 2 018 406 B1**
(45) Date of publication and mention of the grant of the patent: **07.03.2012**
(21) Application number: 07743754.9
(22) Date of filing: 15.05.2007
(51) Int. Cl.: C08J 9/00, B29C 67/20, H01M 2/16

(54) **MICROPOROUS POLYOLEFIN MEMBRANE, ITS PRODUCTION METHOD, BATTERY SEPARATOR AND BATTERY**
MIKROPORÖSE POLYOLEFINMEMBRAN, HERSTELLUNGSVERFAHREN DAFÜR, BATTERIESEPARATOR UND BATTERIE
MEMBRANE DE POLYOLÉFINE MICROPOREUSE, PROCÉDÉ DE PRODUCTION DE CELLE-CI, SÉPARATEUR D'ACCUMULATEUR ET ACCUMULATEUR

(30) Priority: 15.05.2006 US 383260
(43) Date of publication of application: 28.01.2009
(73) Proprietor: Toray Tonen Specialty Separator Godo Kaisha, Tochigi Prefecture, 329-2763 (JP)
(72) Inventor: OZAKI, Hiroyuki, Kawasaki-shi, Kanagawa; 211-0045 (JP); KIMISHIMA, Kotaro, Yokohama-shi, Kanagawa; 235-0022 (JP); KONO, Koichi, Asaka-shi, Saitama 351-0025 (JP); BRANT, Patrick, Seabrook, Texas 77586 (US); LIN, Zerong, Kingwood, Texas 77345 (US); BRINEN, Jeffery, Lawrence, League City, Texas 77573 (US)
(74) Representative: Strehl Schübel-Hopf & Partner
(86) International application number: PCT/JP2007/060320
(87) International publication number: WO 2007/132942

(56) References cited:
- JP-A- 05 222 236
- JP-A- 2002 105 235
- JP-A- 2004 196 870
- US-B1- 6 407 171
- US-B1- 6 428 901

## Description

### FIELD OF THE INVENTION

The present invention relates to a microporous polyolefin membrane comprising a polyethylene resin and a sufficient amount of polypropylene and having suitable permeability, mechanical properties and meltdown properties, its production method, a battery separator composed of such microporous polyolefin membrane, and a battery comprising such a separator.

### BACKGROUND OF THE INVENTION

Microporous polyolefin membranes are widely used for various applications such as battery separators used for lithium secondary batteries, nickel-hydrogen batteries, nickel-cadmium batteries, polymer batteries, etc., electrolytic capacitor separators, various filters such as reverse osmosis filtration membranes, ultrafiltration membranes, microfiltration membranes, etc., moisture-permeable, waterproof clothes, medical materials, etc. When the microporous polyolefin membrane is used for battery separators, particularly lithium ion battery separators, its performance largely affects the properties, productivity and safety of batteries. Accordingly, the microporous polyolefin membrane should have suitable mechanical properties, heat resistance, permeability, dimensional stability, shutdown properties, meltdown properties, etc.

In general, microporous membranes composed only of polyethylene (i.e., consisting essentially of or consisting of polyethylene) have low meltdown temperatures, while microporous membranes composed only of polypropylene have high shutdown temperatures and poor mechanical strength. Accordingly, microporous membranes comprising polyethylene and polypropylene as main components would be useful as battery separators. To provide microporous membranes with improved mechanical strength, ultra-high-molecular-weight polyolefin is preferably added. For instance, JP3-64334A discloses a method for producing a microporous polyolefin membrane comprising (1) forming a gel-like molding (or sheet) comprising a composition containing a membrane-forming solvent and ultra-high-molecular-weight polyolefin such that the ratio of weight-average molecular weight ("Mw") to number-average molecular weight ("Mn") is in a desired range, (2) stretching the gel-like molding without removing the solvent, and then (3) removing the solvent.

Japanese Patent 3348965 discloses a biaxially oriented microporous film made of a composition comprising 20-80% by mass of high-molecular-weight polyethylene having an intrinsic viscosity [η] of 10 dl/g or more, and 80-20% by mass of high-molecular-weight polypropylene having an intrinsic viscosity [η] of 3-15 dl/g, and having suitable shut-down temperature properties, rupture temperature properties, rigidity, tensile strength and air permeability.

However, microporous membranes comprising polyethylene and polypropylene, particularly those containing ultra-high-molecular-weight polyolefin, tend to be poor in such properties as thickness uniformity, etc. For instance, when ultra-high-molecular-weight polyethylene is added to microporous polyolefin membranes comprising high-molecular-weight polyethylene and high-molecular-weight polypropylene, the membranes tend to have a surface texture similar to that of a shark skin (see JP6-96753A). When microporous membranes having poor thickness uniformity are used as battery separators, they are likely to suffer short-circuiting, poor production yield, and poor cycle-ability due to low compression resistance.

In order to overcome this difficulty, JP2002-194132A discloses a microporous polyolefin membrane comprising polypropylene having MFR of 2.0 or less, and a polyethylene composition with weight-average molecular weight / number-average molecular weight of 8-100, the polypropylene content being 20% or less by mass. Specifically, JP2002-194132A discloses a microporous polyolefin membrane comprising 30% by mass, based on the total mass of the membrane, of ultra-high-molecular-weight polyethylene having a weight-average molecular weight of 2.0 x 10⁶, 65% by mass of high-density polyethylene having a weight-average molecular weight of 3.0 x 10⁵ (with the ultra-high-molecular-weight polyethylene and the high-density polyethylene together providing a combined polyethylene Mw/Mn of 20.5), and 5% by mass of a propylene homopolymer having a weight-average molecular weight of 6.0 x 10⁵ and MFR of 0.5. This microporous polyolefin membrane has conventional thickness uniformity and production yield.

JP2004-196870A discloses a microporous polyolefin membrane having conventional thickness uniformity, heat resistance, mechanical properties, permeability, dimensional stability, shutdown properties, meltdown properties, and compression resistance. The reference discloses a microporous polyolefin membrane composed of (i) polyethylene and (ii) polypropylene having a weight-average molecular weight of 5 x 10⁵ or more and a heat of fusion (measured by differential scanning calorimeter) of 90 J/g or more. The polypropylene content is 20% or less by mass. JP2004-196871A discloses a microporous polyolefin membrane composed of (i) polyethylene and (ii) polypropylene having a weight-average molecular weight of 5 x 10⁵ or more, and a melting point (measured by a differential scanning calorimeter at a temperature-elevating rate of 3-20°C/min) of 163°C or higher. The polypropylene content is 20% or less by mass. However, further improvements to the meltdown properties are desired over the microporous polyolefin membranes disclosed by JP2002-194132A, JP2004-196870A and JP2004-196871 A. In particular, it would be desirable to increase the polypropylene content of the membrane to more than 20% by mass.

Desirably, the polypropylene content would be increased in microporous polyolefin membranes comprising polyethylene and polypropylene to obtain improved meltdown properties (e.g., meltdown temperatures of 175°C and higher) without a significant decrease in permeability and pin puncture strength. Thus, there is a need for microporous membranes suitable for use as battery separators which membranes comprise polyethylene and polypropylene and have high meltdown temperatures and suitable (i.e., optimized) permeability and mechanical properties.

### SUMMARY OF THE INVENTION

In an embodiment, the invention relates to a microporous polyolefin membrane comprising polyethylene and a sufficient amount of polypropylene having suitable permeability, mechanical properties, and meltdown properties. The invention also relates to a microporous polyolefin membrane production method, and a battery separator composed of such microporous polyolefin membrane. In other embodiments, the invention relates to a battery comprising such a microporous polyolefin membrane and to a method for using such a battery.

The invention is based in part on the discovery that (1) a microporous polyolefin membrane having suitable meltdown properties can be made from a polyethylene resin and a polypropylene resin. The polypropylene in the polypropylene resin should have a weight-average molecular weight of 6 x 10⁵ or more, a heat of fusion ΔHₘ (measured, e.g., by a differential scanning calorimeter) of 90 J/g or more. Polypropylene having a molecular weight of 1.8 x 10⁶ or more should be present in an amount of 10% or more by mass based on the mass of the polypropylene resin. The invention is also based in part on the discovery that by extruding a molten blend of such polyethylene and polypropylene resins , and a membrane-forming solvent through a die, cooling the extrudate to form a gel-like sheet, and conducting the stretching of the gel-like sheet and the removal of the membrane-forming solvent, a microporous polyolefin membrane having suitable permeability, mechanical properties and meltdown properties, can be obtained even when the membrane has 20% or more of polypropylene by on the mass of the resin composition. The order of the preceding stretching and solvent-removal steps is not critical , and one or more of the steps can be repeated at selected points in the process if desired.

Thus, in an embodiment the invention relates to a microporous polyolefin membrane according to claim 1.

The preferred embodiments of the present invention are according to claims 2-7.

In another embodiment, the invention relates to a method for producing a microporous polyolefin membrane according to claim 8.

The preferred embodiments of the present invention are according to claim 9.

In another embodiment, the invention relates to a separator comprising a microporous polyolefin membrane of any of the preceding embodiments.

In another embodiment, the invention relates to a battery, preferably a secondary battery, more preferable a lithium ion secondary battery, according to claim 11.

In another embodiment, the invention relates to a method for making a battery according to claim 12.

In yet another embodiment, the invention relates to a power source (particularly a rechargeable power source) for electrical and/or electronic equipment according to claim 13.

### BRIEF DESCRIPTION OF THE DRAWINGS

Fig. 1 is a graph showing a typical example of DSC curves.

Fig. 2 is a graph showing a typical example of GPC curves.

Fig. 3 is a graph showing the same GPC curve as in Fig. 2, in which a high-molecular-weight portion is hatched.

### DETAILED DESCRIPTION OF THE INVENTION

In an embodiment, the invention relates to a method for making a microporous polyolefin membrane. For example, the method can involve the initial steps of extruding a polyolefin solution through a die to form a gel-like sheet. The polyolefin solution comprises polyethylene, polypropylene, and at least one membrane-forming solvent. These materials (also known as "starting materials") will now be described in more detail.

[1] Materials used to make the microporous polyolefin membrane

In an embodiment, the polyolefin solution is made by combining at least a polyethylene resin and a polypropylene resin e.g., by melt-blending, to form a polyolefin composition, and combining the membrane-forming solvent and the polyolefin composition to form the polyolefin solution. Alternatively the membrane-forming solvent, polyethylene resin, and polypropylene resin can be combined to form the polyolefin solution.

Accordingly, in one embodiment the polyolefin composition comprises (a) a polyethylene resin, (b) polypropylene resin having a weight-average molecular weight of 6 x 10⁵ or more and a heat of fusion of 90 J/g or more (as measured e.g., by differential scanning calorimetry). At least 10% by mass of the polypropylene resin should have a molecular weight greater than or equal to 1.8 x 10⁶ based on the total mass of the polypropylene resin. In an embodiment, the polyethylene resin comprises polyethylene and the polypropylene resin comprises polypropylene. In another embodiment, the polyethylene resin consists essentially of polyethylene and the polypropylene resin consists essentially of polypropylene. In yet another embodiment, the polyethylene resin consists of polyethylene and the polypropylene resin consists of polypropylene, i.e., the polyethylene resin contains polyethylene only and the polypropylene resin contains polypropylene only.

(1) Polyethylene resin

Embodiments of polyethylene resin are as follows.
(i) The polyethylene resin is (a) an ultra-high-molecular-weight polyethylene, (b) a second polyethylene having a weight-average molecular weight lower than the ultra-high-molecular-weight polyethylene, (c) the ultra-high-molecular-weight polyethylene and the second polyethylene, or (d) the ultra-high-molecular-weight polyethylene and a second polyolefin which comprises neither polyethylene nor polypropylene.
(ii) The above ultra-high-molecular-weight polyethylene has a weight-average molecular weight of 5 x 10⁵ or more.
(iii) The weight-average molecular weight of the above ultra-high-molecular-weight polyethylene ranges from 1 x 10⁶ to 15 x 10⁶, or from 1 x 10⁶ to 5 x 10⁶ .
(iv) The above ultra-high-molecular-weight polyethylene can be an ethylene homopolymer, or an ethylene·α-olefin copolymer containing 15 mol% or less of a second α-olefin, where the second α-olefin is not ethylene.
(v) Any of the above polyethylene resins has a weight-average molecular weight of 2 x 10⁵ or more.
(vi) The above ultra-high-molecular-weight polyethylene and the second polyethylene described in (i)(c) comprises (a) ultra-high-molecular-weight polyethylene has a weight-average molecular weight of 5 x 10⁵ or more, and (b) the polyethylene having a weight-average molecular weight of 1 x 10⁴ or more but less than 5 x 10⁵.
(vii) The above ultra-high-molecular-weight polyethylene and a second polyolefin which comprises neither polyethylene nor polypropylene described in (i)(d) comprises (a) ultra-high-molecular-weight polyethylene having a weight-average molecular weight of 5 x 10⁵ or more, and (b) the second polyolefin selected from the group of at least one of polybutene-1 having a weight-average molecular weight ranging from 1 x 10⁴ to 4 x 10⁶, a polyethylene wax having a weight-average molecular weight ranging from 1 x 10³ to 1 x 10⁴, and an ethylene·α-olefin copolymer (which does not contain propylene) having a weight-average molecular weight ranging from 1 x 10⁴ to 4 x 10⁶.
(viii) The polyethylene having a weight-average molecular weight of 1 x 10⁴ or more but less than 5 x 10⁵ in the polyethylene resin described in (vi) above is at least one selected from the group consisting of high-density polyethylene, medium-density polyethylene, branched low-density polyethylene, and linear low-density polyethylene.
(ix) The polyethylene resin described in (viii) above comprises ultra-high-molecular-weight polyethylene has a weight-average molecular weight of 5 x 10⁵ or more, and high-density polyethylene having a weight-average molecular weight of 1 x 10⁴ or more but less than 5 x 10⁵.

We describe these embodiments in detail hereinafter.

In an embodiment, the polyethylene resin comprises (a) an ultra-high-molecular-weight polyethylene, (b) a second polyethylene having a weight-average molecular weight lower than the ultra-high-molecular-weight polyethylene, (c) the ultra-high-molecular-weight polyethylene and the second polyethylene, or (d) the ultra-high-molecular-weight polyethylene and a second polyolefin which comprises neither polyethylene nor polypropylene. In any of the cases (a) through (d), the polyethylene resin preferably has a weight-average molecular weight of 2 x 10⁵ or more. When the weight-average molecular weight is less than 2 x 10⁵, the gel-like sheet can rupture during stretching, which detrimentally affects the yield of a suitable microporous polyolefin membrane.

(a) The ultra-high-molecular-weight polyethylene

In an embodiment, the ultra-high-molecular-weight polyethylene has a weight-average molecular weight of 5 x 10⁵ or more. The ultra-high-molecular-weight polyethylene can be an ethylene homopolymer, or an ethylene·α-olefin copolymer containing 15 mol% or less of a second α-olefin, where the second α-olefin is not ethylene. In an embodiment, the second α-olefin is one or more of propylene, butene-1, hexene-1, pentene-1, 4-methylpentene-1, octene, vinyl acetate, methyl methacrylate, or styrene. An ethylene·α-olefin copolymer can be produced by single-site catalyst. The weight-average molecular weight of the ultra-high-molecular-weight polyethylene ranges from 1 x 10⁶ to 15 x 10⁶, or from 1 x 10⁶ to 5 x 10⁶.

(b) The second polyethylene

In an embodiment, the second polyethylene has a weight-average molecular weight in the range greater than or equal to 1 x 10⁴ but less than 5 x 10⁵. In other words, the second polyethylene can have an Mw in the range of 1 x 10⁴ ≤ Mw < 5 x 10⁵. In an embodiment, the second polyethylene is one or more of high-density polyethylene, medium-density polyethylene, branched low-density polyethylene, and linear low-density polyethylene. The second polyethylene can be an ethylene homopolymer, or a copolymer containing 15 mol% or less a small of the second α-olefin. The second α-olefin was previously described in the discussion of the ultra-high molecular weight polyethylene. Such copolymer may be produced using a single-site catalyst.

(c) The ultra-high-molecular-weight polyethylene and the second polyethylene

In an embodiment, the polyethylene resin comprises the ultra-high-molecular-weight polyethylene and the second polyethylene. The ultra-high-molecular-weight polyethylene and the other polyethylene are as described above for cases (a) and (b). In a preferred embodiment, the resin is the ultra-high-molecular-weight polyethylene and the second polyethylene, where the second polyethylene has a weight-average molecular weight of 1 x 10⁴ or more but less than 5 x 10⁵; the second polyethylene being at least one selected from the group consisting of high-density polyethylene, medium-density polyethylene, branched low-density polyethylene, and linear low-density polyethylene. In this embodiment, the molecular weight distribution (Mw/Mn) of the polyethylene in the polyethylene resin can be controlled depending on the required physical properties (e.g. shut-down property, pin puncture strength). Preferably, the ultra-high-molecular-weight polyethylene has a weight-average molecular weight of 5 x 10⁵ or more.

(d) The ultra-high-molecular-weight polyethylene and a second polyolefin

In an embodiment, the polyethylene resin comprises the ultra-high-molecular-weight polyethylene and a second polyolefin. The ultra-high-molecular-weight polyethylene is as described above for case (a). The second polyolefin is neither polyethylene homopolymer nor polypropylene homopolymer. In an embodiment, the second polyolefin is at least one of polybutene-1 having a weight-average molecular weight ranging from 1 x 10⁴ to 4 x 10⁶, a polyethylene wax having a weight-average molecular weight ranging from 1 x 10³ to 1 x 10⁴, and an ethylene·α-olefin copolymer (which does not contain propylene) having a weight-average molecular weight ranging from 1 x 10⁴ to 4 x 10⁶.

In cases (c) and (d), the amount of the ultra-high-molecular-weight polyethylene in the polyethylene resin can be 1% or more by mass based on the mass of the polyethylene resin. Alternatively, the ultra-high-molecular-weight polyethylene can be present in the polyethylene resin in an amount ranging from 1% to 80% by mass, based on the mass of the polyethylene resin.

In cases (a) through (d) the polyethylene resin can be characterized by a molecular weight distribution, i.e., Mw/Mn.

Mw/Mn is a measure of a molecular weight distribution, and the larger this value, the wider the molecular weight distribution. Though not particularly critical, the Mw/Mn of the polyethylene resin preferably ranges from 5 to 300, more preferably from 10 to 100. Generally, when the Mw/Mn is less than 5, the polyolefin solution is difficult to extrude. On the other hand, when the Mw/Mn of the polyethylene resin is more than 300, the resulting microporous polyolefin membrane can have reduced strength. The Mw/Mn of polyethylene (homopolymer and ethylene·α-olefin copolymer) can be properly controlled by a multi-stage polymerization when the resin is synthesized. In an embodiment, the polyethylene resin is produced by a multi-stage polymerization process, preferably a two-stage polymerization process where a high-molecular-weight polymer component is formed in the first stage, and a lower-molecular-weight polymer component is formed in the second stage. In cases (c) and (d), a large Mw/Mn generally results from a large difference in the weight-average molecular weight value for the ultra-high-molecular-weight polyethylene as compared to the Mw for the second polyethylene (case (c)) or the second polyolefin (case (d)), and vice versa. The Mw/Mn of the polyethylene composition can be properly controlled by the molecular weights and mixing ratios of components, e.g., by conventional mixing methods.

(2) Polypropylene resin

Embodiments of polypropylene resin are as follows.
(i) The polypropylene preferably has a weight-average molecular weight of 8 x 10⁵ or more.
(ii) Among the above polypropylene, a fraction having a molecular weight of 1.8 x 10⁶ or less (determined from a molecular weight distribution) is preferably 10.5% or more by mass.
(iii) The above polypropylene preferably has a heat of fusion of 95 J/g or more.

We describe these embodiments in detail hereinafter.

In an embodiment, the polypropylene resin has a weight-average molecular weight of 6 x 10⁵ or more, and a heat of fusion ΔHₘ (as measured e.g., by differential scanning calorimetry ("DSC") according to JIS K7122) of 90 J/g or more. A temperature-elevating rate for the measurement of the heat of fusion is preferably 3-20°C/minute, usually 10°C/minute. When the polypropylene in the polypropylene resin has a heat of fusion ΔHₘ of less than 90 J/g, the resultant microporous membrane can have undesirably low pin puncture strength and permeability characteristics. In particular the resultant films can have an undesirably low meltdown temperature.

At least 10% by mass of the polypropylene in the polypropylene resin should have a molecular weight of 1.8 x 10⁶ or more based on the total mass of the polypropylene in the polypropylene resin. In an embodiment, the polypropylene has a weight-average molecular weight of 8 x 10⁵ or more. Polypropylene having a weight-average molecular weight of less than 6 x 10⁵ can be difficult to combine with the polyethylene resin. As a result, polypropylene having a weight-average molecular weight of less than 6 x 10⁵ provides a microporous polyolefin membrane with undesirably large surface micro-roughness and large thickness variations. When the polypropylene resin contains a significant amount of polypropylene having a molecular weight of 1.8 x 10⁶ or more being less than 10%, the microporous polyolefin membrane can have undesirably low pin puncture strength and permeability characteristics. The term "a significant amount" in this context means that a portion (or fraction) of the polypropylene resin can be polypropylene having a molecular weight of 1.8 x 10⁶ or more. When the fraction's mass is less than 10% of the total mass of the polypropylene in the polypropylene resin, the resulting microporous membrane can have undesirably low pin puncture strength and permeability characteristics.

In an embodiment, the weight-average molecular weight of the polypropylene resin is preferably 6.5 x 10⁵ or more, more preferably 8 x 10⁵ or more. When the polypropylene resin contains a fraction of polypropylene having a molecular weight of 1.8 x 10⁶ or more, this fraction is preferably 10.5% or more by mass, more preferably 10.8% or more by mass based on the mass of the polypropylene resin. While not wishing to be bound by any theory or model, it is believed that when the polypropylene resin contains a portion or fraction of relatively high molecular weight polypropylene, the resulting microporous polyolefin membrane has improved pin puncture strength and meltdown properties. Though not particularly critical, the Mw/Mn of the polypropylene resin preferably ranges from 1 to 100. The heat of fusion ΔHₘ of the polypropylene resin is preferably 95 J/g or more, more preferably 100 J/g or more.

The amount of polypropylene resin in the polyolefin composition ranges from 30 to 70% by mass, based on the mass of the polyolefin composition. When the amount of polypropylene resin in the polyolefin composition is less than 30% by mass, it is more difficult to make a microporous polyolefin membrane having a suitable meltdown temperature. When the amount of polypropylene resin in the polyolefin composition exceeds 70% by mass, based on the mass of the polyolefin composition, it is more difficult to make a microporous membrane of uniform thickness.

The particular grade or type of polypropylene is not critical, so long as the (i) polypropylene resin contains a significant amount of polypropylene having a molecular weight of 1.8 x 10⁶ or more (which can be determined, e.g., from a measurement of molecular weight distribution), (ii) the polypropylene resin has a weight-average molecular weight of 6 x 10⁵ or more, and (iii) the heat of fusion ΔHₘ of the polypropylene resin is 90 J/g or more. Accordingly, the polypropylene can be a propylene homopolymer, a copolymer of propylene and the third α-olefin, or a mixture thereof, the homopolymer being preferable. The copolymer may be a random or block copolymer. The third α-olefin can be, e.g., one or more of ethylene, butene-1, pentene-1, 4-methylpentene-1, octene, vinyl acetate, methyl methacrylate, styrene, etc.

Having described the starting materials, representative embodiments of the process for making the microporous polyolefin membranes will now be described in more detail.

[2] Production method of microporous polyolefin membrane

In an embodiment, the invention relates to a method for producing a microporous polyolefin membrane which comprises
(1) forming a polyolefin solution comprising a polyethylene resin, a polypropylene resin, and at least one membrane-forming solvent;
(2) extruding the resultant polyolefin solution through a die and cooling the extrudate to form a gel-like sheet;
(3) stretching and removing the membrane-forming solvent.

In an embodiment, the method further comprises (4) of drying the solvent-removed and stretched gel-like sheet of step (3).

In another embodiment, the following steps can be performed after step (4), if desired,
(5) a heat treatment step,
(6) a cross-linking step with ionizing radiations,
(7) a hydrophilizing treatment step, etc. may be conducted.

The steps of this embodiment will now be described in more detail.

(1) Preparation of the polyolefin solution

In an embodiment, the polyolefin solution is made by combining polyethylene resin, polypropylene resin, and at least one membrane-forming solvent. For example, the polyethylene resin, the polypropylene resin, and the one membrane-forming solvent can be melt-blended to prepare the polyolefin solution. In another example, the polyethylene resin and polypropylene resin can be melt-blended to form a polyolefin composition, and then one or more membrane-forming solvents are added to the polyolefin composition in order to make the polyolefin solution. Optionally, the polyolefin solution can further comprise additives such as antioxidants, ultraviolet absorbers, antiblocking agents, pigments, dyes, inorganic fillers, etc. in a range. These additives, when used, are generally added in amounts sufficient to improve the processability of the polyolefin solution and/or improve the properties of the resulting microporous polyolefin membrane The additives should not be used in amounts large enough to adversely affect the desired membrane properties, even when further improvements in processability can be attained. For example, the additives, when used, can be present in an amount ranging from 0.01 to 2 parts on the basis of total amount of 100 parts of the polyolefin in the polyolefin solution. Fine silicate powder may be added as a pore-forming agent, for instance in amount of less than 50% on the basis of 100% of the polyolefin in the polyolefin solution.

In an embodiment, the membrane-forming solvent is a liquid at room temperature. While not wishing to be bound, it is believed that the use of a liquid solvent makes it possible to conduct stretching at a relatively high magnification. The liquid solvents can be aliphatic or alicyclic hydrocarbons such as nonane, decane, decalin, p-xylene, undecane, dodecane, liquid paraffin, etc.; mineral oil distillates having boiling points comparable to those of the above hydrocarbons; and phthalates liquid at room temperature such as dibutyl phthalate, dioctyl phthalate, etc. It is believed that use of non-volatile liquid solvents such as liquid paraffin, provides a gel-like sheet having a stable liquid solvent content. In an embodiment, a solvent which is miscible with polyethylene in a melt-blended state but solid at room temperature can be used either alone or together with the liquid solvent. Such solid solvent includes stearyl alcohol, ceryl alcohol, paraffin waxes, etc. However, when a solid solvent is used alone, i.e., with no liquid solvent, it can be more difficult to evenly stretch the gel-like sheet.

In an embodiment, the viscosity of the liquid solvent ranges from 30 to 500 cSt, or from 30 to 200 cSt at a temperature of 25°C. When the viscosity at 25°C is less than 30 cSt, foaming of the polyolefin solution can occur, which can lead to difficulties in blending the components of the polyolefin solution. On the other hand, when the viscosity is more than 500 cSt, the removal of the liquid solvent can be more difficult.

Though not particularly critical, the uniform melt-blending of the polyolefin solution is preferably conducted in a double-screw extruder, particularly when it is desirable to have a relatively high polyolefin concentration in the polyolefin solution. The melt-blending temperature is preferably in a range of the melting point Tm of the polypropylene to Tm + 80°C. In an embodiment, the melt-blending temperature ranges from 160 to 250°C, or from 180 to 230°C. The melting point can be determined, e.g., by differential scanning calorimetry (DSC) according to JIS K7121. In an embodiment, the polypropylene resin and polyethylene resin are dry mixed before melt-blending, but this is not required. The membrane-forming solvent may be added before, during, or after melt- blending. For example, the solvent can be charged into the double-screw extruder in an intermediate portion during blending. When additives are desired, they can be added before, during, or after melt-blending. For example, an antioxidant can be added to the polyolefin solution during melt blending to prevent the oxidation of the polyolefin in the polyolefin solution.

When a double-screw extruder is used for melt-blending, the mixing screws can be characterized by a ratio L/D of the screw length L to the screw diameter D. In an embodiment, L/D ranges from 20 to 100, or from 35 to 70. When L/D is less than 20, melt-blending can be more difficult. When L/D is more than 100, the residence time of the polyolefin solution increases, which can lead to polyolefin molecular weight degradation. Though not critical, lower limit of weight average molecular weight of polyolefin is 100,000. While not critical, the cylinder of the double-screw extruder generally has an inner diameter ranging from about 40 to 80 mm.

In an embodiment, the amount of polyolefin (e.g., the polyethylene from the polyethylene resin and the polypropylene from the polypropylene resin) in the polyolefin solution ranges from 1 to 75% by mass, or from 20 to 70% by mass, based on 100% by mass of the polyolefin solution. When the polyolefin solution contains less than 1% by mass, large swelling or neck-in can occur at the die exit during the extrusion of the polyolefin composition solution because the solution is like liquid, resulting in decrease in the formability and self-support characteristics of the gel-like sheet (or molding). On the other hand, when the polyolefin composition is more than 75% by weight, it can be more difficult to obtain the polyolefin solution or form the gel-like sheet.

(2) Formation step of gel-like sheet

The polyolefin solution is used to form a gel-like sheet by e.g., casting or extrusion. For example, the melt-blended polyolefin solution can be extruded through a die directly attached to the extruder to from the gel-like sheet. Alternatively, the polyolefin solution could be extruded one or more additional times by extrusion equipment in series with the first extruder, with the final extrusion through the die occurring at the end of the series. In another example, the polyolefin solution can be extruded, cooled and then pelletized for use in a subsequent extrusion through a die. When a die is used, it is generally a sheet-forming die having a rectangular-cross-section orifice, though a double-cylindrical hollow die, an inflation die lip, etc. can also be used.

In an embodiment where the polyolefin solution is extruded through a die, the extruder can be characterized in that the ratio Q/Ns of the extrusion rate Q (kg/h) of the polyolefin solution to the number of revolutions [Ns (rpm)] of the screw in the double-screw extruder is preferably 0.3 kg/h/rpm or less. This improves the dispersibility of polypropylene in the microporous membrane, resulting in further improved thickness uniformity and heat resistance of the membrane. The rotational speed Ns of the screw is preferably 180 rpm or more. Though not particularly critical, the upper limit of the rotational speed Ns of the screw is preferably 500 rpm. Though not particularly critical, the extrusion rate Q (kg/h) of the polyolefin solution ranges from 1 to 400 (kg/h). Q/Ns is more preferably 0.25 kg/h/rpm or less. Though not critical, the lower limit of Q/Ns is preferably 0.01 kg/h/rpm. Q/Ns can be controlled by selecting the shape of the screw (for instance, diameter, depth of grooves at the exit, etc.).

In an embodiment where a sheet-forming die is used to form a gel-like sheet, the die gap is typically ranges from 0.1 to 5 mm. The die is generally heated during use to a temperature ranging from about 140 to about 250°C. The taking-up rate of the polyolefin solution (e.g. decided by cooling roll rate) is preferably 0.2 to 15 m/minute.

The polyolefin solution extruded from the die is formed into a gel-like sheet (also called a molding) by cooling. Cooling is preferably conducted at least to a gelation temperature of the extrudate, or lower, at a cooling rate of 50°C/minute or more. Cooling is preferably conducted to 25°C or lower. Such cooling can set the micro-phases of the polyolefin composition phase separated by the membrane-forming solvent. Generally, a slower cooling rate provides a gel-like sheet with larger pseudo-cell units, resulting in a coarser higher-order structure. On the other hand, a higher cooling rate results in denser cell units. A cooling rate less than 50°C/minute can lead to increased crystallinity, making it more difficult to provide the gel-like sheet with suitable stretch-ability. Usable cooling methods include one or more of bringing the gel-like sheet into direct contact with a cooling medium such as cooling air, cooling water, etc.; a bringing the gel-like sheet into contact with rolls cooled by a cooling medium; etc.

(3) Step of stretching and removing membrane-forming solvent

In an embodiment, the gel-like sheet is stretched in at least one direction, preferably at least one lateral direction (e.g., parallel to the machine direction ("MD") or parallel to the transverse direction ("TD"). This step is typically carried out by (a) removing the liquid solvent after the stretching of the gel-like sheet; (b) stretching the membrane after the removal of the liquid solvent from the gel-like sheet; or (c) stretching the gel-like sheet and then removing the liquid solvent to form a membrane, and further stretching the membrane.

(a) first method (removing the liquid solvent after the stretching of the gel-like sheet)

In an embodiment, the gel-like sheet is heated and stretched to a predetermined magnification, by at least one of a tenter method, a roll method, an inflation method, or a rolling method. The stretching may be conducted monoaxially or biaxially, though the biaxial stretching in the lateral directions (i.e., directions perpendicular to the thickness of the sheet) is preferable. In the case of biaxial orientation, any of simultaneous biaxial stretching, sequential stretching or multi-stage stretching (for instance, a combination of the simultaneous biaxial stretching and the sequential stretching) may be used, though the simultaneous biaxial stretching is preferable. The stretching improves the mechanical strength of the membrane.

The stretching magnification is preferably 2 fold or more, or in the range of 3 to 30 fold for monoaxial stretching. When biaxial stretching is used, the stretching magnification is generally 3 fold or more in the directions of stretching, namely 9 fold or more in area magnification, or optionally 25 fold or more in area magnification. With an area magnification of 9 fold or more, the pin puncture strength of the resulting microporous polyolefin membrane is improved. When the area magnification is more than 400 fold, very large stretching equipment might be required, leading to operational difficulties during stretching.

Regardless of whether the polyethylene resin is a homopolymer or a copolymer, when polyethylene resin is ultra-high-molecular-weight polyethylene or the second polyethylene (i.e., polyethylene resin cases (a) and (b) but not (c) or (d)), the stretching temperature is generally the melting point of the polyethylene resin + 10°C, or lower. Optionally, the stretching temperature ranges from the polyethylene's crystal dispersion temperature upwards to the polyethylene's crystal melting point. When the stretching temperature is higher than the polyethylene's crystal melting point + 10°C, the polyethylene is molten, and the molecular chains of polymer might not orient during stretching. On the other hand, when the stretching temperature is lower than the crystal dispersion temperature, the polyethylene is too soft, so that the gel-like sheet is more easily broken before a high stretching magnification can be achieved. When sequential stretching or multi-stage stretching of the gel-like sheet is conducted, primary stretching may be conducted at a lower temperature than the crystal dispersion temperature, with subsequent (secondary, tertiary, etc.) stretching occurring at or above the polyethylene's crystal dispersion temperature. The "crystal dispersion temperature" can be determined by measuring the temperature characteristics of the kinetic viscoelasticity according to ASTM D 4065. The ultra-high-molecular-weight polyethylene and the second polyethylene typically have crystal dispersion temperatures in the range of about 90 to 100°C.

In the case where the polyethylene resin is ultrahigh molecular weight polyethylene and the second polyethylene or ultrahigh molecular weight polyethylene and the second polyolefin (i.e., polyethylene resin cases (c) or (d)), the stretching temperature is preferably in a range of the crystal dispersion temperature of the polyethylene in the polyethylene resin or higher and the crystal melting point of the polyethylene in the polyethylene resin + 10°C or lower. The stretching temperature is typically in the range of 100 to 140°C, or optionally 110 to 120°C.

Depending on desired properties, stretching may be conducted with a temperature distribution in a direction parallel to the thickness of the gel-like sheet. Optionally, sequential or multi-stage stretching may be conducted with primary stretching at relatively low temperatures with subsequent stretching steps or stages at higher temperatures. The stretching with a temperature distribution in a thickness direction can provide a microporous polyolefin membrane with suitable mechanical strength. The detailed description of this method is given by JP7-188440A.

(b) second method (stretching the membrane after the removal of the liquid solvent from the gel-like sheet)

Second method is carried out the same way as first method except for removal of the liquid solvent in advance. The process of removal of the liquid solvent is described afterwards.

(c) third method (stretching the gel-like sheet and then removing the liquid solvent to form a membrane, and further stretching the membrane)

Third method is carried out the same way as first method in the process of stretching the gel-like sheet. Third method is carried out the same way as second method in the process of further stretching the membrane. The process of removal of the liquid solvent is described afterwards.

. In an embodiment, the membrane-forming solvent is removed from the stretched gel-like sheet to form the microporous polyolefin membrane. Any method can be used which is capable of removing the membrane-forming solvent from the stretched gel-like sheet without significantly changing the structure and composition of the polyolefin phase(s) in the sheet. For example, the gel-like sheet can be washed with a washing solvent to remove the membrane -forming solvent, and then dried to remove the washing solvent, in order to form the microporous polyolefin membrane. Accordingly, a washing solvent can be used to remove (or displace or dissolve or rinse or wash away) the membrane-forming solvent. Because the stretched gel-like sheet contains at least a polyolefin phase and a separate membrane-forming solvent phase, the removal of the liquid solvent provides a porous membrane. In an embodiment, liquid solvent removal can be conducted by using any solvent capable of, e.g., displacing, dissolving, rinsing, or washing away the membrane-forming solvent. Suitable washing solvents include, for instance, one or more of volatile solvents such as saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; or hydrofluoroethers such as C₄F₉OCH₃, C₄F₉OC₂H₅, etc., perfluoroethers such as C₄F₉OCF₃, C₄F₉OC₂F₅, etc. While not required, the washing solvents can have a low surface tension (for instance, 24 mN/m or less at25°C), particularly if a drying step is used. While not wishing to be bound by any theory or model, it is believed that the use of a washing solvent with low surface tension helps prevent the pore-forming network structure in the resulting microporous polyolefin membrane from shrinking during drying, as might otherwise occur from interfacial tension effects. Consequently, the resulting microporous polyolefin membrane generally has better porosity and permeability.

The stretched gel-like sheet can be washed by immersion in the washing solvent and/or the showering of sheet with the washing solvent. The amount of washing solvent used is not critical provided it is used in an amount sufficient for removing the membrane-forming solvent. In an embodiment, the amount of washing solvent generally ranges from 300 to 30,000 parts by mass of washing solvent per 100 parts by mass of the stretched gel-like sheet. Washing is preferably conducted until the amount of the remaining membrane-forming solvent becomes less than 1% by mass of the amount present in the stretched gel-like sheet before washing.

(4) Drying step of membrane

In cases where the washing solvent does not have a sufficiently high vapor pressure (and/or sufficiently low interfacial tension) to evaporate from the membrane, a drying step can be used to remove the washing solvent. For example, the microporous polyolefin membrane obtained by stretching and the removal of the membrane-forming solvent can be dried by a heat-drying method, a wind-drying (i.e., moving air) method, etc., and combinations thereof. The drying temperature is preferably equal to or lower than the crystal dispersion temperature of the polyethylene resin, particularly at least 5°C lower than the crystal dispersion temperature. In an embodiment, drying is conducted until the amount of washing solvent remaining in the membrane is 5% or less by mass, or optionally 3% or less by mass, per 100% by mass (on a dry basis) of the microporous polyolefin membrane. Insufficient drying can lead to a decrease in the porosity of the microporous membrane, particularly when a subsequent heat treatment is employed, resulting in reduced permeability.

(5) Heat treatment step

While not required, the dried microporous membrane can be heat-treated to improve the membrane's mechanical and thermal characteristics. Accordingly, in an embodiment, a heat treatment is used to stabilize crystalline polyolefin regions in the membrane, resulting in uniform lamella layers. The heat treatment can be, for example, a heat-stretching treatment (heating the membrane under tension in at least one lateral direction), a heat-setting treatment (annealing with not added tension or compression) and/or a heat-shrinking treatment (heating the membrane under compression in at least one lateral direction), which may be properly selected depending on the required properties. JP2657430 B2, JP2001-172420A JP2001-192487 A and JP2001-229907A disclose the typical heat treatment method. In any of these heat-treatment methods, the heat treatment can be conducted at a temperature equal to or lower than the melting point of the polyethylene resin, or optionally a temperature ranging from 60°C to the melting point of the polyethylene resin + 10°C.

In an embodiment, a heat-stretching treatment and/or a heat-setting treatment are conducted by a tenter method or a roll method. In an embodiment, a heat-stretching treatment is employed, with a stretching magnification ranging from about 1.01 to 2.0 fold, or optionally 1.01 to 1.5 fold, in at least one direction (preferably MD or TD). In another embodiment, a heat-shrinking treatment is employed, e.g., using a belt conveyer or an air-floating heating furnace, with a shrinkage ratio of 50% or less, or optionally 30% or less, in at least one direction (preferably MD or TD), based on the original size in the measured direction prior to shrinkage.

When used, the heat-stretching treatment generally improves the permeability of the microporous polyolefin membrane and increases its pore diameters. Average pore diameter of the membrane can be measured by ASTM F316-86, JIS K1150, etc. While the term "diameter" is used, the pores are not necessarily spherical. In an embodiment, both heat-setting (annealing) and heat-stretching are employed, with the heat-setting treatment preferably conducted after the heat-stretching treatment. In another embodiment, a heat-shrinking treatment can be conducted after heat-stretching. When heat-shrinking is conducted after a heat-stretching treatment, the resultant microporous polyolefin membrane generally has improved (lower) shrinkage ratio (e.g. length change ratio after heating at 105°C for 8 hours) and higher high strength.

(6) Cross-linking treatment step of membrane

An optional cross-linking step can be used, with or without prior heat treatment. Cross-linking of the microporous polyolefin membrane can be accomplished using ionizing radiation rays such as α-rays, β-rays, γ-rays, electron beams. In the case of irradiating electron beams, the amount of electron beam radiation preferably ranges from 0.1 to 100 Mrad, and the accelerating voltage preferably ranges from 100 to 300 kV It is believed that the cross-linking treatment elevates the meltdown temperature of the microporous polyolefin membrane.

(7) Hydrophilizing treatment step

The microporous polyolefin membrane can be subjected to a hydrophilizing treatment (a treatment that makes the microporous polyolefin membrane more hydrophilic). For example, the hydrophilizing treatment can be a monomer-grafting treatment, a surfactant treatment, a corona-discharging treatment, etc. When a monomer-grafting treatment is used, it is preferably conducted after the cross-linking treatment of step (6).

In the case of a surfactant treatment, any of nonionic surfactants, cationic surfactants, anionic surfactants and amphoteric surfactants can be used (alone or in combination), although nonionic surfactants are preferred. For example, the microporous polyolefin membrane can be dipped in a solution of the surfactant in water or a lower alcohol such as methanol, ethanol, isopropyl alcohol, etc., or coated with the solution by a doctor blade method.

[3] The Properties and Composition of the Microporous polyolefin membrane

(A) In an embodiment, the microporous polyolefin membrane has the following properties.

(1) Porosity ranging from 25 to 80% of the total volume of the membrane.

When the porosity is less than 25%, the microporous polyolefin membrane does not have good air permeability. Air permeability is an important property of the microporous polyolefin membrane because as air permeability is improved, the battery capacity is also improved. When the porosity exceeds 80%, it is difficult to provide batteries with suitable strength, electrical impedance, and resistance to short-circuiting. Suitable porosity can be decided according to required physical properties. When applied to high capacity of battery, high porosity is required. On the other hand, when applied to battery implying to importance of safety, low porosity is required.

(2) Air permeability ranging from 20 to 2,000 seconds/100 cc (converted to the value at 20-µm thickness)

When the air permeability ranges from 20 to 2,000 seconds/100 cc (JIS P8117),batteries with separators formed by the microporous polyolefin membrane have suitably large capacity and suitable cycle characteristics. When the air permeability exceeds 2,000 seconds/100 cc, the batteries have decreased capacity. When the air permeability is less than 20 seconds/100 cc, battery shutdown might not occur to the desired extent when the battery's internal temperature is elevated to a temperature of 145°C.

(3) Pin puncture strength of 2,000 mN/20 µm or more

When the pin puncture strength is less than 2,000 mN/20 µm, short-circuiting might occur in batteries with separators formed by the microporous polyolefin membrane. The pin puncture strength (converted to the value at 20-µm thickness) of the microporous membrane is represented by the maximum load measured when the microporous membrane is pricked with a needle of 1 mm in diameter with a spherical end surface (radius R of curvature: 0.5 mm) at a rate of 2 mm/second.

(4) Meltdown temperature of 170°C or more

The meltdown temperature is generally in the range of 170 to 190°C. Meltdown temperature can be measured as follows. A microporous polyolefin membrane of 5 cm x 5 cm is sandwiched between two blocks, with each block having a circular opening of 12 mm in diameter. A tungsten carbide ball of 10 mm in diameter was then placed on the microporous polyolefin membrane in the circular opening. The meltdown temperature is defined as the temperature of the membrane (while heating at a temperature-elevating rate of 5°C/minute) at which the ball ruptured the microporous polyolefin membrane by melting.

(5) Shutdown temperature in the range of 120 to 140°C

The temperature at which the air permeability of the microporous polyolefin membrane reaches 100,000 seconds/100 cc is defined as a shutdown temperature. Air permeability can be measured according to JIS P8117.

(B) The Composition of the Microporous Polyolefin Membrane

In an embodiment, the invention relates to a microporous polyolefin membrane which comprises
(1) polyethylene and
(2) polypropylene, the polypropylene having
   (i) a weight-average molecular weight of 6 x 10⁵ or more and
   (ii) a heat of fusion of 90 J/g or more (as measured, e.g., by differential scanning calorimetry);
      wherein at least 10% by mass of the polypropylene has a molecular weight greater or equal to than 1.8 x 10⁶ based on the total mass of the polypropylene.

The polyolefin in the microporous polyolefin membrane is obtained from the polyethylene and polypropylene resins used to make the membrane. It is believed that the properties and characteristics of the polyethylene and polypropylene in the resins do not change significantly during the processing of the membrane. In other words, the properties and characteristics of the polypropylene and polyethylene in the microporous polyolefin membrane are substantially the same as the polyethylene and polypropylene in the resins used to make the membranes.

(1) The Polyethylene in the Microporous Polyolefin Membrane

In an embodiment, the polyethylene in the microporous polyolefin membrane comprises (a) an ultra-high-molecular-weight polyethylene, (b) a second polyethylene having a weight-average molecular weight lower than the ultra-high-molecular-weight polyethylene, (c) the ultra-high-molecular-weight polyethylene and the second polyethylene, or (d) the ultra-high-molecular-weight polyethylene and a second polyolefin which comprises neither polyethylene nor polypropylene. In any of the cases (a) through (d), the polyethylene preferably has a weight-average molecular weight of 2 x 10⁵ or more.

(a) The ultra-high-molecular-weight polyethylene

The ultra-high-molecular-weight polyethylene has a weight-average molecular weight of at least 5 x 10⁵, and can be an ethylene homopolymer, or an ethylene·α-olefin copolymer containing a small amount of a second α-olefin, where the second α-olefin is not ethylene. The second α-olefin, when present, can be one or more of propylene, butene-1, hexene-1, pentene-1, 4-methylpentene-1, octene, vinyl acetate, methyl methacrylate, or styrene. The weight-average molecular weight of the ultra-high-molecular-weight polyethylene ranges from 1 x 10⁶ to 15 x 10⁶, or optionally from 1 x 10⁶ to 5 x 10⁶_{.}

(b) The second polyethylene

In an embodiment, the second polyethylene has a weight-average molecular weight in the range greater than or equal to 1 x 10⁴ but less than 5 x 10⁵. In other words, the second polyethylene can have an Mw in the range of 1 x 10⁴ ≤ Mw < 5 x 10⁵ . In an embodiment, the second polyethylene is one or more of high-density polyethylene, medium-density polyethylene, branched low-density polyethylene, and linear low-density polyethylene. The second polyethylene can be an ethylene homopolymer, or a copolymer containing a small amount of the second α-olefin. The second α-olefin was previously described in the discussion of the ultra-high molecular weight polyethylene.

(c) The ultra-high-molecular-weight polyethylene and the second polyethylene

In an embodiment, the polyethylene microporous polyolefin membrane comprises the ultra-high-molecular-weight polyethylene and the second polyethylene. The ultra-high-molecular-weight polyethylene and the other polyethylene are as described above for cases (a) and (b). In a preferred embodiment, the polyethylene in the microporous polyolefin membrane is the ultra-high-molecular-weight polyethylene and the second polyethylene, where the second polyethylene has a weight-average molecular weight of 1 x 10⁴ or more but less than 5 x 10⁵; the second polyethylene being at least one of high-density polyethylene, medium-density polyethylene, branched low-density polyethylene, and linear low-density polyethylene. Preferably, the ultra-high-molecular-weight polyethylene has a weight-average molecular weight of 5 x 10⁵ or more.

(d) The ultra-high-molecular-weight polyethylene and a second polyolefin

In an embodiment, the polyethylene in the microporous polyolefin membrane comprises the ultra-high-molecular-weight polyethylene and a second polyolefin. The ultra-high-molecular-weight polyethylene is as described above for case (a). The second polyolefin is neither polyethylene nor polypropylene. In an embodiment, the second polyolefin is at least one of polybutene-1 having a weight-average molecular weight ranging from 1 x 10⁴ to 4 x 10⁶, a polyethylene wax having a weight-average molecular weight ranging from 1 x 10³ to 1 x 10⁴, and an ethylene α-olefin copolymer (not containing polypropylene) having a weight-average molecular weight ranging from 1 x 10⁴ to 4 x 10⁶.

In cases (c) and (d), the amount of the ultra-high-molecular-weight polyethylene in the polyethylene component (or portion) of the microporous polyolefin membrane can be 1% or more by mass based on the mass of the polyethylene component. Alternatively, the ultra-high-molecular-weight polyethylene can be present in the polyethylene component in an amount ranging from 1% to 80% by mass, based on the mass of the polyethylene component.

In cases (a) through (d) the polyethylene in the microporous polyolefin membrane can be characterized by a molecular weight distribution. Though not particularly critical, the Mw/Mn of the polyethylene in the microporous polyolefin membrane preferably ranges from 5 to 300, more preferably from 10 to 100.

(2) The Polypropylene in the Microporous Polyolefin Membrane

In an embodiment, the polypropylene component (or portion) in the microporous polyolefin membrane has a weight-average molecular weight of at least 6 x 10⁵ and a heat of fusion ΔHₘ of 90 J/g or more. At least 10% by mass of the polypropylene in the microporous polyolefin membrane should have a molecular weight greater than or equal to 1.8 x 10⁶ based on the total mass of the microporous polyolefin membrane.

In an embodiment, the polypropylene in the microporous polyolefin membrane has a weight-average molecular weight of 8 x 10⁵ or more. In an embodiment, the amount or portion (or fraction) of the polypropylene in the microporous polyolefin membrane that is polypropylene having a molecular weight of 1.8 x 10⁶ or more should be greater than or equal to 10% of the total mass of the polypropylene in the microporous polyolefin membrane.

In an embodiment, the weight-average molecular weight of the polypropylene is preferably 6.5 x 10⁵ or more, more preferably 8 x 10⁵ or more. When the polypropylene in the microporous polyolefin membrane contains a portion or fraction of polypropylene having a molecular weight of 1.8x 10⁶ or more, this portion is preferably 10.5% or more by mass, more preferably 10.8% or more by mass based on the mass of the polypropylene in the microporous polyolefin membrane. Though not particularly critical, the Mw/Mn of the polypropylene in the microporous polyolefin membrane preferably ranges from 1 to 100. The heat of fusion ΔHₘ of the polypropylene in the microporous polyolefin membrane is preferably 95 J/g or more, more preferably 100 J/g or more.

In an embodiment, the amount of polypropylene in the microporous polyolefin membrane ranges from 30 to 70% by mass, based on the mass of the microporous polyolefin membrane.

The polypropylene can be a propylene homopolymer, a copolymer of propylene and the third α-olefin, or a mixture thereof, the homopolymer being preferable. The copolymer may be a random or block copolymer. The third α-olefin can be, e.g., one or more of ethylene, butene-1, pentene-1, 4-methylpentene-1, octene, vinyl acetate, methyl methacrylate, styrene, etc.

[4] Battery separator

The battery separator formed by the above microporous polyolefin membrane preferably has a thickness of 3-200 µm, more preferably 5-50 µm. The desired thickness depends on the type of batteries to be manufactured.

[5] Battery

The microporous polyolefin membranes of the present invention can be used as separators for batteries such as lithium ion batteries, lithium-polymer secondary batteries, nickel-hydrogen secondary batteries, nickel-cadmium secondary batteries, nickel-zinc secondary batteries, silver-zinc secondary batteries, particularly for lithium ion secondary batteries. By way of example only, the following description is directed toward lithium ion secondary battery embodiments. The invention is not limited to lithium-ion secondary batteries.

A lithium secondary battery comprises a cathode and an anode laminated via with a separator situated therebetween, and wherein the separator contains an electrolytic solution (electrolyte). The electrode can be of any convenient structure including conventional electrode structures. The electrode structure can be, for instance, a coin type in which disc-shaped cathode and anode are opposing, a laminate type in which planar cathode and anode are alternately laminated, a toroidal type in which ribbon-shaped cathode and anode are laminated to a membrane separator and then wound along the longest axis of the separator, etc.

The cathode usually comprises a current collector, and a cathodic active material layer capable of absorbing and discharging lithium ions, which is formed on the current collector. The cathodic active materials can be inorganic compounds such as transition metal oxides, composite oxides of lithium and transition metals (lithium composite oxides), transition metal sulfides, etc. The transition metals can be V, Mn, Fe, Co, Ni, etc. Preferred examples of the lithium composite oxides are lithium nickelate, lithium cobaltate, lithium manganate, laminar lithium composite oxides based on α-NaFeO₂, etc. The anode comprises a current collector, and a negative-electrode active material layer formed on the current collector. The negative-electrode active materials can be carbonaceous materials such as natural graphite, artificial graphite, cokes, carbon black, etc.

The electrolytic solutions are obtained by dissolving lithium salts in organic solvents. The lithium salts can be LiClO₄, LiPF₆, LiAsF₆, LiSbF₆, LiBF₄, LiCF₃SO₃, LiN(CF₃SO₂)₂, LiC(CF₃SO₂)₃, Li₂B₁₀Cl₁₀, LiN(C₂F₅SO₂)₂, LiPF₄(CF₃)₂, LiPF₃(C₂Fₛ)₃, lower aliphatic carboxylates of lithium, LiAlCl₄, etc. The lithium salts can be used alone or in combination. The organic solvents can be organic solvents having high boiling points and high dielectric constants such as ethylene carbonate, propylene carbonate, ethylmethyl carbonate, γ-butyrolactone, etc.; organic solvents having low boiling points and low viscosity such as tetrahydrofuran, 2-methyltetrahydrofuran, dimethoxyethane, dioxolane, dimethyl carbonate, diethyl carbonate, etc. These organic solvents can be used alone or in combination. Because the organic solvents having high dielectric constants have high viscosity, while those having low viscosity have low dielectric constants, mixtures of organic solvents are preferably used.

When the battery is assembled, the separator can be impregnated with the electrolytic solution, so that the separator (the microporous membrane ) is provided with ion permeability. The impregnation treatment can be (and usually is) conducted by immersing the microporous membrane in the electrolytic solution at room temperature. Although it is not critical, when a cylindrical battery is assembled, for instance, a cathode sheet, a separator formed by the microporous membrane, and an anode sheet are generally laminated in this order, and the resultant laminate is wound to form an electrode assembly. The resultant electrode assembly can be charged and then impregnated with the above electrolytic solution. The battery lid can act as a cathode terminal, and a safety valve can be caulked to the battery can via a gasket to produce the battery.

The present invention will be explained in more detail referring to Examples below without intention of restricting the scope of the present invention.

Example 1

100 parts by mass of a polyolefin composition was prepared as follows: 1% by mass of ultra-high-molecular-weight polyethylene (UHMWPE) having a weight-average molecular weight (Mw) of 2.5 x 10⁶, 49% by mass of high-density polyethylene (HDPE) having Mw of 3.0 x 10⁵, and 50% by mass of a propylene homopolymer (PP) having Mw of 2.69 x 10⁶, Mw/Mn of 3.5, and a heat of fusion of 99.9 J/g, a fraction having a molecular weight of 1.8 x 10⁶ or more being 57.2% by mass per PP), and 1.0 parts by mass of tetrakis[methylene-3-(3,5-ditertiary-butyl-4-hydroxyphenyl)-propionate] methane as an antioxidant were dry-blended to form the polyolefin composition. Measurement revealed that a polyethylene composition of UHMWPE and HYPE had a melting point of 135°C, and a crystal dispersion temperature of 90°C.

The Mw and Mw/Mn of UHMWPE and HDPE were measured by a gel permeation chromatography (GPC) method under the following conditions.
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500 µl,
Detector: Differential Refractometer available from Waters Corp., and
Calibration curve: Produced from a calibration curve of a single-dispersion, standard polystyrene sample using a predetermined conversion constant.

The Mw and Mw/Mn of the PP were measured by a gel permeation chromatography (GPC) method under the following conditions.
Measurement apparatus: Alliance 2000 GPC available from Waters Corp.,
Column: PL Gel mixed-B available from Polymer Laboratories,
Column temperature: 145°C,
Solvent (mobile phase): 1,2,4-trichlorobenzene,
Solvent flow rate: 1.0 ml/minute,
Sample concentration: 0.25 mg/mL (dissolved at 175°C for 1 hour),
Injected amount: 300 µl,
Detector: Differential Refractometer available from Waters Corp., and
Calibration curve: Produced from a calibration curve of a single-dispersion, standard polystyrene sample using a predetermined conversion constant.

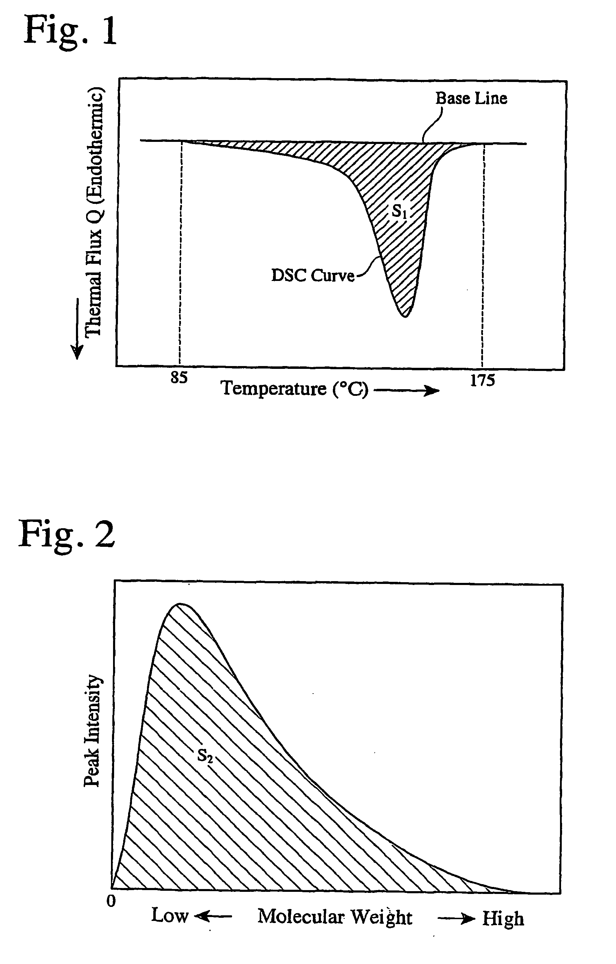

The heat of fusion ΔHₘ of polypropylene (PP) was measured according to JIS K7122 as follows: A polypropylene sample was heat-treated at 190°C for 10 minutes in a nitrogen atmosphere in a sample holder of a differential scanning calorimeter (DSC-System 7 available from Perkin Elmer, Inc.), cooled to 40°C at a rate of 10°C/minute, kept at 40°C for 2 minutes, and heated to 190°C at a rate of 10°C/minute. As shown in Fig. 1, a straight line passing through points on a DSC curve (melting curve) obtained by the temperature-elevating process at 85°C and 175°C was drawn as a base line, and the amount of heat was calculated from the area S₁ of a hatched portion encircled by the base line and the DSC curve. The amount of heat (unit: J) was divided by the weight (unit: g) of the sample to determine the heat of fusion ΔHₘ (unit: J/g).

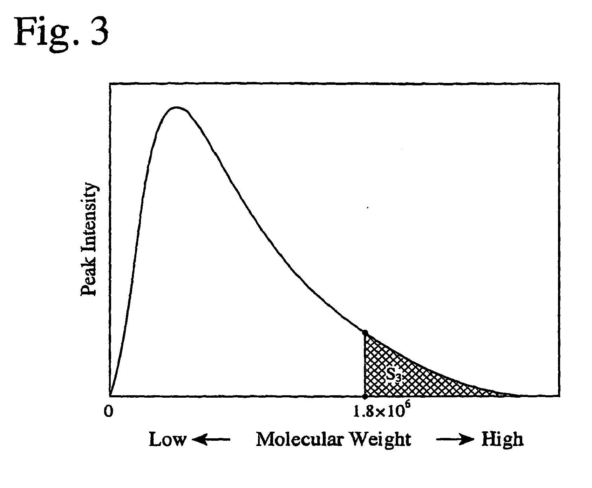

The percentage (on a mass basis) of a portion having a molecular weight of 1.8 x 10⁶ or more to the entire PP was determined as follows: To determine the amount of the entire PP, the area S₂ of a hatched portion encircled by the GPC curve and the base line in Fig. 2 was measured. To determine the amount of the portion having a molecular weight of 1.8 x 10⁶ or more, the area S₃ in Fig. 3 was measured. The percentage of a fraction having a molecular weight of 1.8 x 10⁶ or more was calculated by (S₃/S₂) x 100 (% by mass).

35 parts by mass of the polyolefin composition were charged into a strong-blending double-screw extruder having an inner diameter of 58 mm and L/D of 42, and 65 parts by mass of a liquid paraffin [40 cst (40°C)] were supplied to the double-screw extruder via a side feeder. Melt blending was conducted at 210°C and 200 rpm to prepare a polyolefin solution. This polyolefin solution was extruded from a T die mounted to a tip end of the double-screw extruder at a rate Q of 8 kg/h with the number Ns of revolutions of the screw kept at 200 rpm (Q/Ns: 0.04 kg/h/rpm), and cooled by cooling rolls controlled at 5°C to form a gel-like sheet.

Using a tenter-stretching machine, the gel-like sheet was simultaneously biaxially stretched at 118°C at a stretching rate of 22%/second in both machine direction (MD) and transverse direction (TD), such that the stretching magnification was 5 fold in both MD and TD. The stretching rate (%/second) is represented by the percentage of the length of the gel-like sheet increasing per 1 second in a stretching direction, assuming that the length of the gel-like sheet before stretched is 100%. The stretched membrane was fixed to an aluminum frame of 20 cm x 20 cm, and immersed in methylene chloride [surface tension: 27.3 mN/m (25°C), boiling point: 40.0°C] controlled at 25°C, and washed with the vibration of 100 rpm for 3 minutes. The resultant membrane was air-cooled at room temperature, and heat-set at 125°C for 5 minutes while being fixed to a tenter, to produce a microporous polyolefin membrane.

Example 2

A microporous polyolefin membrane was produced in the same manner as in Example 1, except for using, as the polypropylene component, a propylene homopolymer having Mw of 1.82 x 10⁶, Mw/Mn of 2.6, and a heat of fusion of 107.2 J/g, a fraction having a molecular weight of 1.8 x 10⁶ or more being 34.9% by mass of the propylene homopolymer.

Example 3

A microporous polyolefin membrane was produced in the same manner as in Example 1, except for using, as the polypropylene component, a propylene homopolymer having Mw of 1.40 x 10⁶, Mw/Mn of 2.6, and a heat of fusion of 111.6 J/g, a fraction having a molecular weight of 1.8 x 10⁶ or more being 25.3% by mass of the propylene homopolymer.

Example 4

A microporous polyolefin membrane was produced in the same manner as in Example 1, except that a propylene homopolymer used as the polypropylene component had Mw of 9.0 x 10⁵, Mw/Mn of 2.4, and a heat of fusion of 109.7 J/g, a fraction having a molecular weight of 1.8 x 10⁶ or more being 10.8% by mass per the propylene homopolymer, and that the polyolefin composition comprised 1.4% by mass of UHMWPE, 68.6% by mass of HDPE and 30% by mass of PP.

Example 5

A microporous polyolefin membrane was produced in the same manner as in Example 1, except for using, as the polypropylene component, a propylene homopolymer having Mw of 9.1 x 10⁵, Mw/Mn of 2.4, and a heat of fusion of 108.5 J/g, a fraction having a molecular weight of 1.8 x 10⁶ or more being 11.1% by mass per the propylene homopolymer.

Example 6

A microporous polyolefin membrane was produced in the same manner as in Example 1, except that the same propylene homopolymer as in Example 4 was used as the polypropylene component, and that the polyolefin composition comprised 0.6% by mass of UHMWPE, 29.4% by mass of HDPE and 70% by mass of PP.

Example 7

A microporous polyolefin membrane was produced in the same manner as in Example 1, except that the same propylene homopolymer as in Example 4 was used as the polypropylene, and that the polyolefin composition comprised 15% by mass of UHMWPE, 35% by mass of HDPE and 50% by mass of PP

Example 8

A microporous polyolefin membrane was produced in the same manner as in Example 1, except that the same propylene homopolymer as in Example 4 was used as the polypropylene, and that the polyolefin composition comprised 50% by mass of HDPE and 50% by mass of PP without UHMWPE.

Example 9

A microporous polyolefin membrane was produced in the same manner as in Example 1, except that the same propylene homopolymer as in Example 4 was used as the polypropylene, and that the UHMWPE used had Mw of 1.2 x 10⁶.

Example 10

A microporous polyolefin membrane was produced in the same manner as in Example 1, except that the same propylene homopolymer as in Example 4 was used as the polypropylene, that the UHMWPE used had Mw of 1.2 x 10⁶, and that the polyolefin composition comprised 50% by mass of UHMWPE and 50% by mass of PP without HDPE.

Comparative Example 1

A microporous polyolefin membrane was produced in the same manner as in Example 1, except for using, as the polypropylene, a propylene homopolymer having Mw of 6.8 x 10⁵, Mw/Mn of 5.9, and a heat of fusion of 94.6 J/g, a fraction having a molecular weight of 1.8 x 10⁶ or more being 7.4% by mass per propylene homopolymer.

Comparative Example 2

A microporous polyolefin membrane was produced in the same manner as in Example 1, except that a propylene homopolymer used as the polypropylene had Mw of 1.56 x 10⁶, Mw/Mn of 3.2, and a heat of fusion of 78.4 J/g, a fraction having a molecular weight of 1.8 x 10⁶ or more being 27.1% by mass per propylene homopolymer, and that the heat-setting temperature was 118°C.

Comparative Example 3

An attempt was made to produce a microporous polyolefin membrane in the same manner as in Example 1, except for using, as the polypropylene, a propylene homopolymer having Mw of 3.0 x 10⁵, Mw/Mn of 4.9, and a heat of fusion of 95.9 J/g, a fraction having a molecular weight of 1.8 x 10⁶ or more being 0% by mass per propylene homopolymer, that the polyolefin composition comprised 1.4% by mass of HMWPE, 68.6% by mass of HDPE and 30% by mass of PP, and that the heat-setting temperature was 118°C. However, because of poor dispersibility of polypropylene, the microporous polyolefin membrane was broken when stretched.

Comparative Example 4

A microporous polyolefin membrane was produced in the same manner as in Example 1, except for using, as polypropylene, a propylene homopolymer having Mw of 6.6 x 10⁵, Mw/Mn of 11.4, and a heat of fusion of 103.3 J/g, a fraction having a molecular weight of 1.8 x 10⁶ or more being 8.2% by mass per propylene homopolymer, and that the heat-setting temperature was 118°C.

Comparative Example 5

A microporous polyolefin membrane was produced in the same manner as in Example 1, except that the same propylene homopolymer as in Comparative Example 1 was used as the polypropylene, that the polyolefin composition comprised 70% by mass of HDPE and 30% by mass of PP without UHMWPE.

The properties of the microporous polyolefin membranes produced in Examples 1-10 and Comparative Examples 1-5 were measured by the following methods.

(1) Average thickness (µm)

The thickness of the microporous polyolefin membrane was measured by a contact thickness meter at an arbitrary MD position over the length of 30 cm in a transverse direction (TD) at 5-mm intervals, and averaged.

(2) Air permeability (sec/100cc/20 µm)

Air permeability P₁ measured on a microporous polyolefin membrane having a thickness T₁ accordingly JIS P8117 was converted to air permeability P₂ at a thickness of 20 µm by the formula of P₂ = (P₁ x 20) /T₁.

(3) Porosity (%)

Measured by a weight method.

(4) Pin puncture strength (mN/20 µm)

The maximum load was measured, when a microporous polyolefin membrane having a thickness of T₁ was pricked with a needle of 1 mm in diameter with a spherical end surface (radius R of curvature: 0.5 mm) at a rate of 2 mm/second. The measured maximum load L₁ was converted to the maximum load L₂ at a thickness of 20 µm by the formula of L₂ = (L₁ x 20)/T₁, and used as pin puncture strength.

(5) Meltdown temperature (°C)

A microporous polyolefin membrane of 5 cm x 5 cm was sandwiched by blocks each having a circular opening of 12 mm in diameter, and a tungsten carbide ball of 10 mm in diameter was placed on the microporous polyolefin membrane in the circular opening. While heating at a temperature-elevating rate of 5°C/minute, the temperature at which the microporous polyolefin membrane was ruptured by melting was measured.

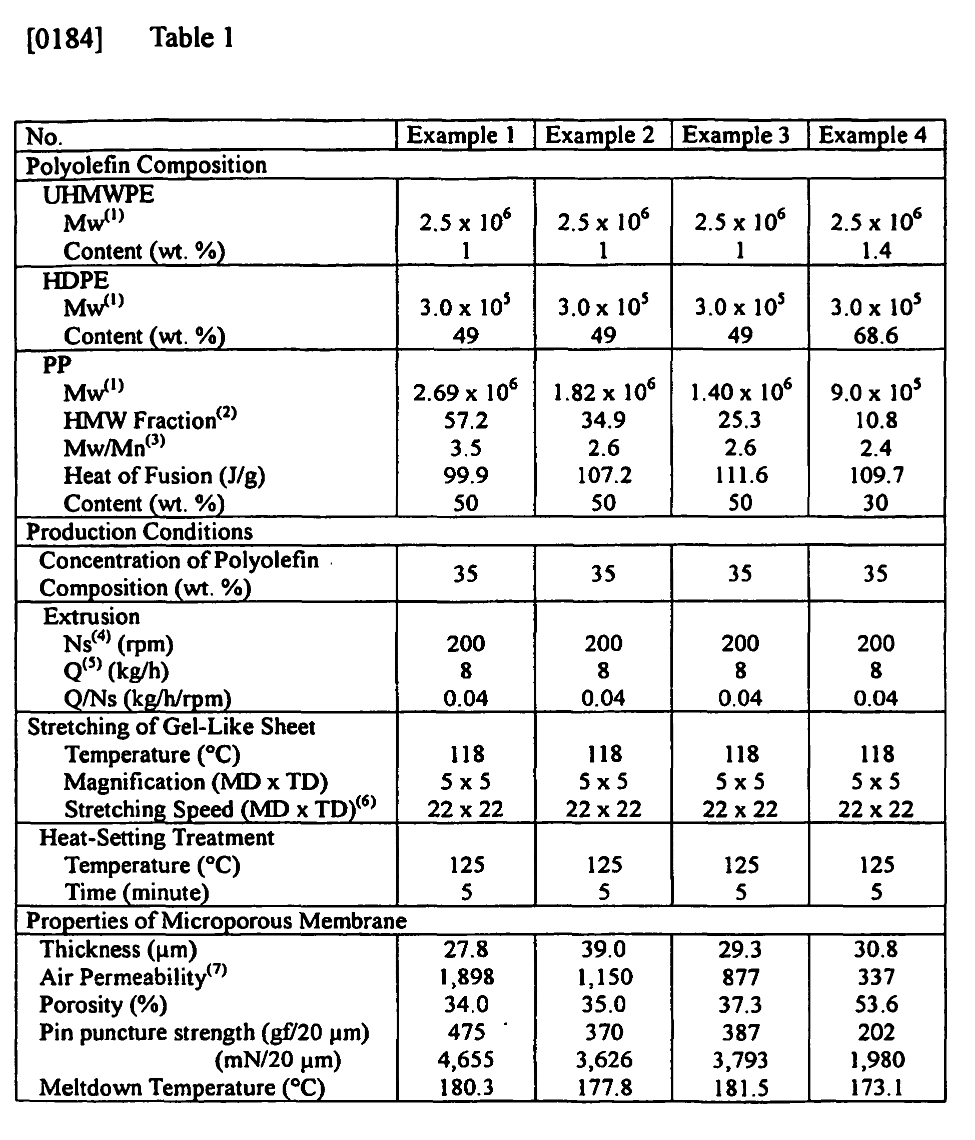

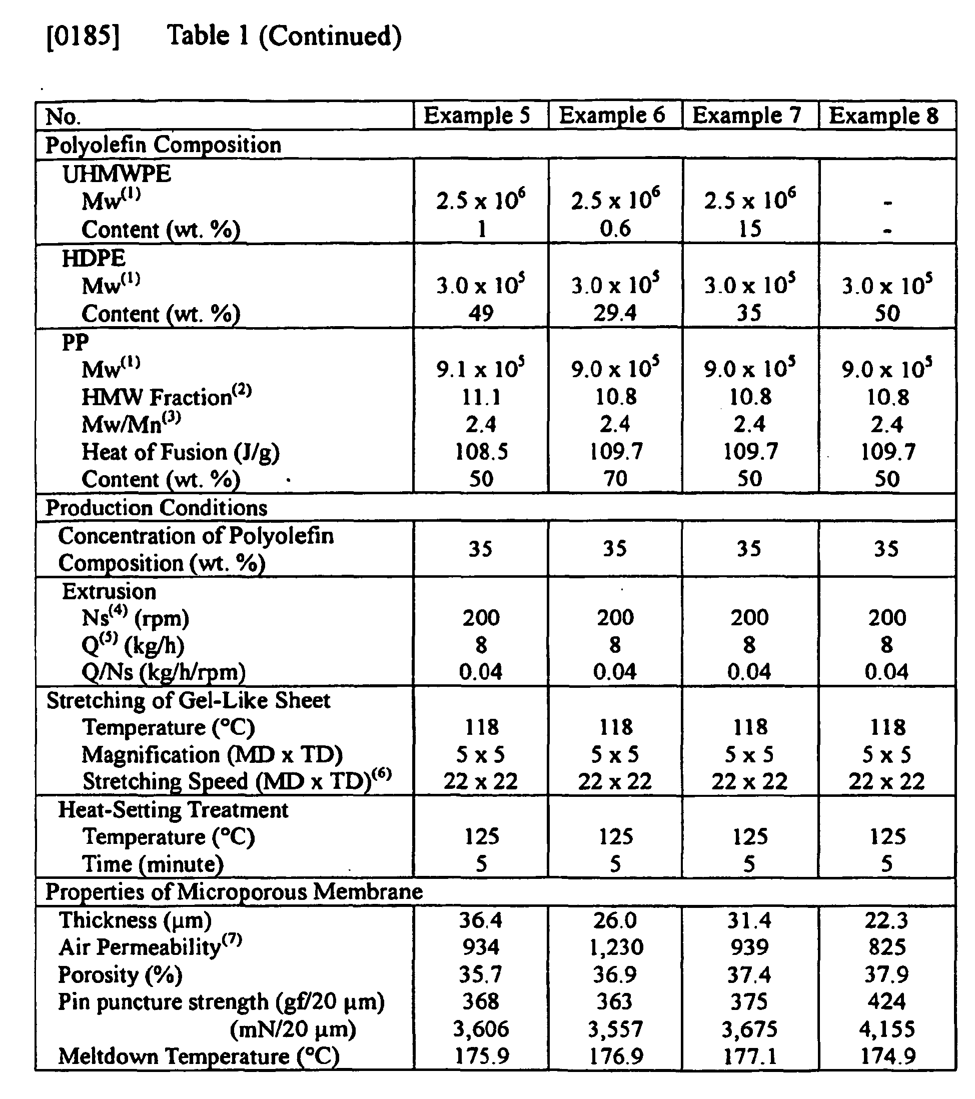

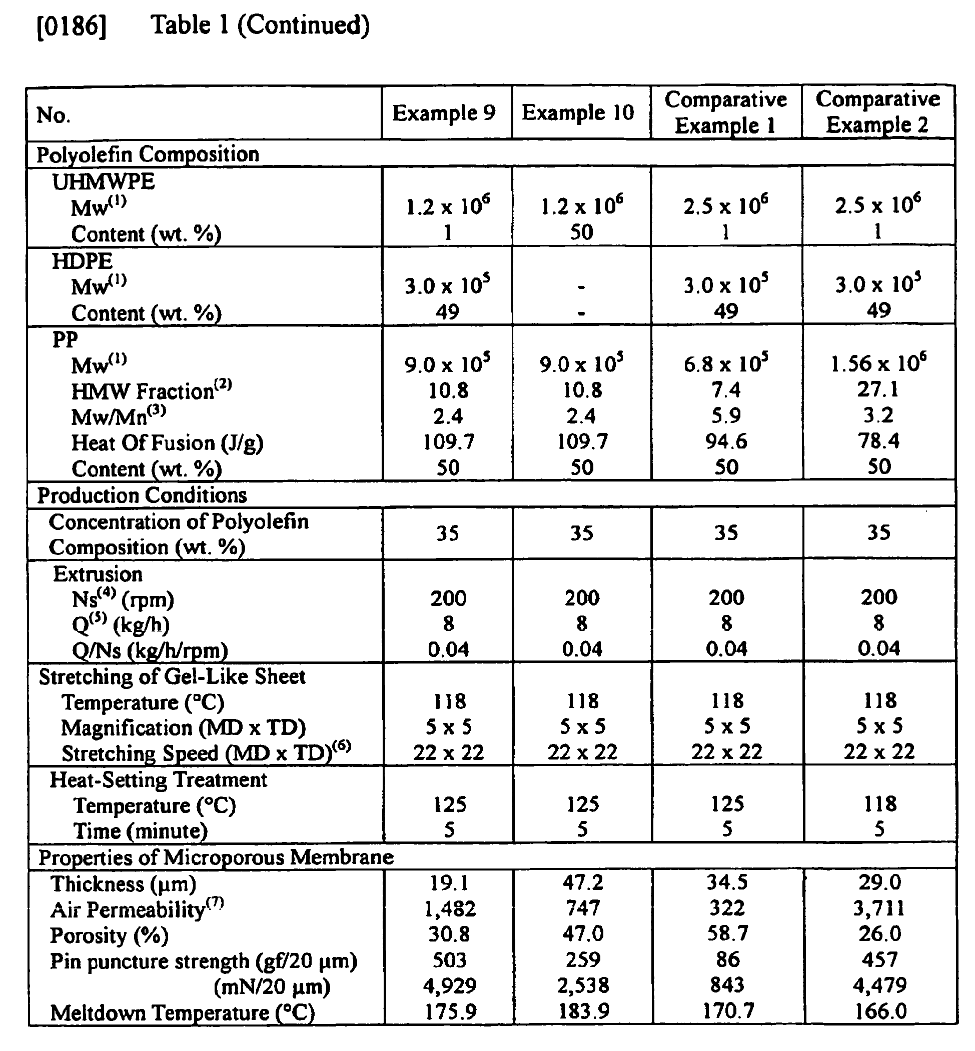

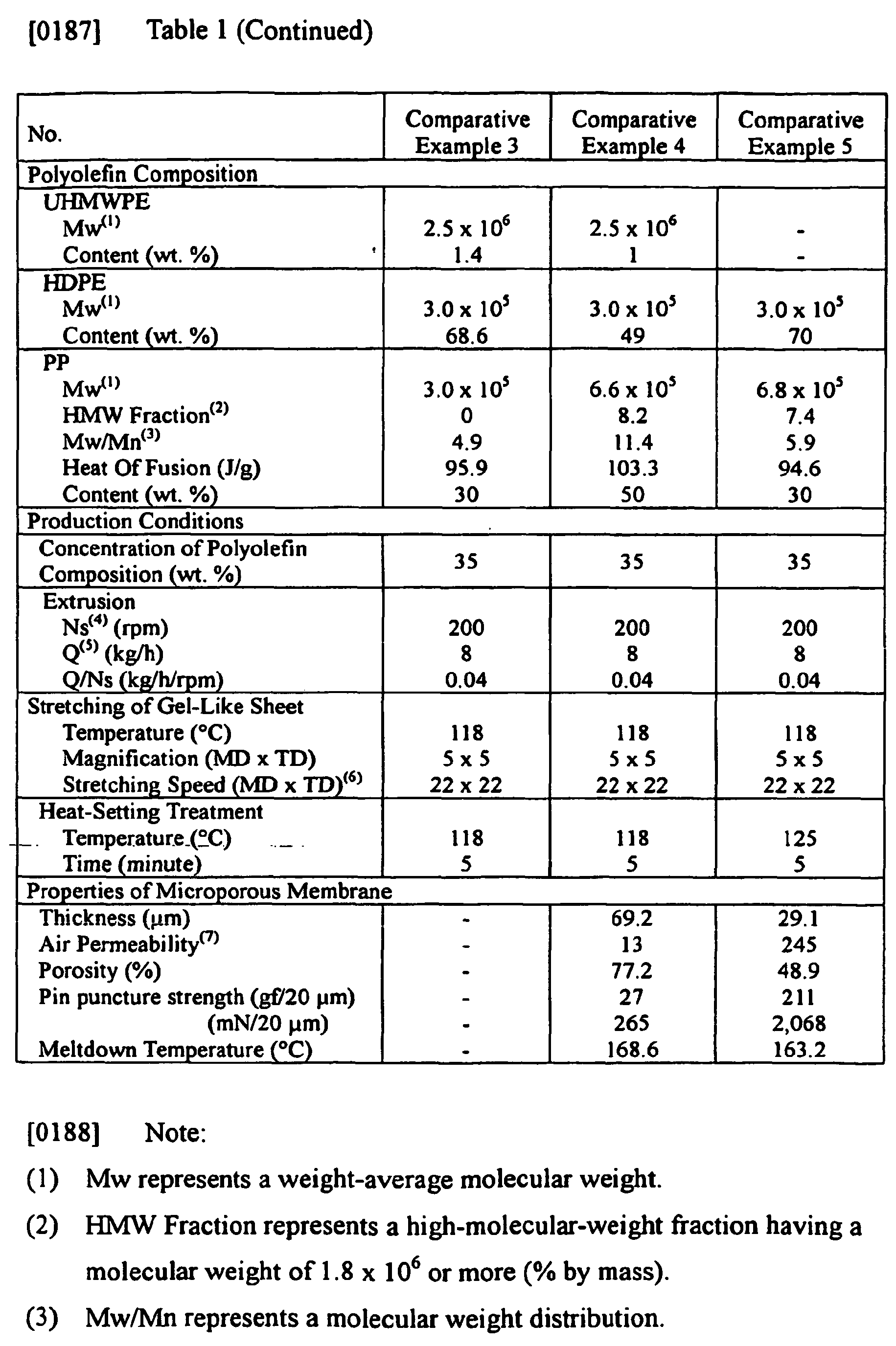

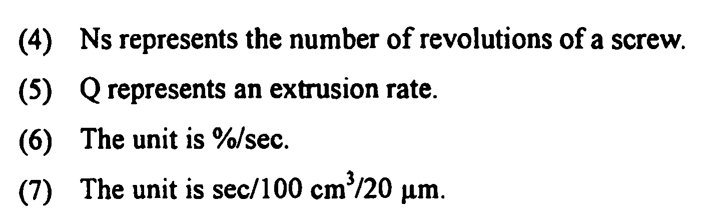

As shown in Table 1, the microporous polyolefin membranes of Examples 1-10 had suitable air permeability, porosity, pin puncture strength, dimensional stability, and meltdown properties. On the other hand, the microporous polyolefin membrane of Comparative Example 1, 4 and 5 was poorer in meltdown properties than those of Examples 1-10, because, it is believed, the fraction of polypropylene having a molecular weight of 1.8 x 10⁶ or more was less than 10% by mass of the polypropylene. Particularly the microporous polyolefin membrane of Comparative Examples 1 and 4 were poorer in meltdown properties and pin puncture strength than those of Examples 1-10. Also, the microporous polyolefin membrane of Comparative Example 2 was poorer in air permeability and meltdown properties than those of Examples 1-10, because the polypropylene had a heat of fusion of less than 90 J/g.

The microporous polyolefin membrane of the present invention has suitable permeability, mechanical properties and meltdown properties. The use of such microporous polyolefin membrane as separators provides batteries with suitable capacity properties, cyclability, discharge properties, heat resistance, compression resistance, productivity, etc.

## Claims

1. A microporous polyolefin membrane which comprises polyethylene and polypropylene, the polypropylene having a weight-average molecular weight of 6 x 10⁵ or more, **characterized in that**
at least 10% by mass of the polypropylene has a molecular weight equal to or greater than 1.8 x 10⁶ based on the total mass of the polypropylene,
the polypropylene has a heat of fusion of 90 J/g or more,
the amount of polypropylene ranges from 30 to 70% by mass, based on the mass of the microporous polyolefin membrane,
the microporous polyolefin membrane has a meltdown temperature in the range of 170 to 190°C.

2. The microporous polyolefin membrane according to claim 1, wherein the polypropylene has a weight-average molecular weight of 8 x 10⁵ or more.

3. The microporous polyolefin membrane according to claim 1 or 2, wherein the polypropylene has 10.5% or more by mass of a fraction having a molecular weight of 1.8 x 10⁶ or more, when determined from a molecular weight distribution.

4. The microporous polyolefin membrane according to any one of claims 1-3, wherein the polypropylene has a heat of fusion of 95 J/g or more.

5. The microporous polyolefin membrane according to any one of claims 1-4, wherein the polyethylene is
(a) an ultra-high-molecular-weight polyethylene having a weight-average molecular weight of 5 x 10⁵ or more,
(b) a second polyethylene having a weight-average molecular weight lower than the ultra-high-molecular-weight polyethylene,
(c) the ultra-high-molecular-weight polyethylene and the second polyethylene, or
(d) the ultra-high-molecular-weight polyethylene and a second polyolefin which comprises neither polyethylene nor polypropylene.

6. The microporous polyolefin membrane according to any one of claims 1-5, wherein the polyethylene comprises
ultra-high-molecular-weight polyethylene having a weight-average molecular weight of 5 x 10⁵ or more, and
high-density polyethylene having a weight-average molecular weight of 1 x 10⁴ or more but less than 5 x 10⁵.

7. The microporous polyolefin membrane according to any one of claims 1-5, wherein the polyethylene comprises high-density polyethylene having a weight-average molecular weight of 1 x 10⁴ or more but less than 5 x 10⁵.

8. A method for making a microporous polyolefin membrane comprising:
(1) extruding a polyolefin solution from a die, where the polyolefin solution comprises a membrane-forming solvent, and a polyolefin composition including polyethylene and polypropylene, the amount of polypropylene in the polyolefin composition ranging from 30 to 70% by mass, based on the mass of the polyolefin composition, the polypropylene having a weight-average molecular weight of 6 x 10⁵ or more and a heat of fusion of 90 J/g or more; wherein at least 10% by mass of the polypropylene has a molecular weight equal to or greater than 1.8 x 10⁶ based on the total mass of the polypropylene;
(2) cooling the resultant extrudate to form a gel-like sheet; and
(3) stretching and removing the membrane-forming solvent in order to form the microporous polyolefin membrane, wherein the microporous polyolefin membrane has a meltdown temperature is in the range of 170 to 190°C.

9. The method according to claim 8, wherein the step (3) is
removing the membrane-forming solvent after the stretching of the gel-like sheet,
stretching the gel-like sheet after the removal of the membrane-forming solvent, or
conducting the stretching of the gel-like sheet and the removal of the membrane-forming solvent in this order and then stretching the gel-like sheet.

10. A battery separator comprising the microporous membrane of any one of claims 1-7.

11. A battery, comprising a cathode, an anode, an electrolyte, and at least one separator which comprises a microporous membrane of any one of claims 1 -7,

12. A method for making a battery comprising:
steps (1) to (3) of the method according to claim 8 in order to form a microporous polyolefin membrane;
(4) forming a layered sheet-like structure comprising (a) a first or cathode layer, (b) a third or anode layer, (c) a second layer or first separator layer located between and proximate to the first and/or third layers, the second layer comprising the microporous polyolefin membrane, and (d) a fourth layer constituting an outer layer of the layered sheet-like structure comprising a second separator layer located proximate to the first or third layer;
(5) winding the layered sheet-like structure along its longest axis to form a electrode assembly; and
(6) charging the first and/or second layer and impregnating the second layer with an electrolyte to form a battery.

13. A source of electric power comprising the battery according to claim 11.

## Patentansprüche

1. Mikroporöse Polyolefinmembran, die Polyäthylen und Polypropylen enthält, wobei das Polypropylen ein gewichtsgemitteltes Molekulargewicht von mindestens 6 x 10⁵ aufweist, **dadurch gekennzeichnet, dass**
wenigstens 10 Massen-% des Polypropylens ein Molekulargewicht von mindestens 1,8 x 10⁶ basierend auf der Gesamtmasse des Polypropylens aufweist,
das Polypropylen eine Fusionswärme von mindestens 90 J/g aufweist,
der Polypropylenanteil zwischen 30 und 70 Massen-% basierend auf der Masse der mikroporösen Polyolefinmembran liegt,
die mikroporöse Polyolefinmembran eine Schmelztemperatur im Bereich von 170 bis 190°C aufweist.

2. Mikroporöse Polyolefinmembran nach Anspruch 1, wobei das Polypropylen ein gewichtsgemitteltes Molekulargewicht von mindestens 8 x 10⁵ aufweist.

3. Mikroporöse Polyolefinmembran nach Anspruch 1 oder 2, wobei das Polypropylen mindestens 10,5 Massen-% eines Anteils mit einem Molekulargewicht von mindestens 1,8 x 10⁶ aufweist, wenn es von einer Molekulargewichtsverteilung bestimmt wird.

4. Mikroporöse Polyolefinmembran nach einem der Ansprüche 1 bis 3, wobei das Polypropylen eine Fusionswärme von mindestens 95 J/g aufweist.

5. Mikroporöse Polyolefinmembran nach einem der Ansprüche 1 bis 4, wobei das Polyäthylen
(a) ein Ultrahochmolekulargewichts-Polyäthylen mit einem gewichtsgemittelten Molekulargewicht von mindestens 5 x 10⁵ ist,
(b) ein zweites Polyäthylen mit einem gewichtsgemittelten Molekulargewicht ist, das geringer ist als das des Ultrahochmolekulargewichts-Polyäthylen,
(c) das Ultrahochmolekulargewichts-Polyäthylen und das zweite Polyäthylen ist, oder
(d) das Ultrahochmolekulargewichts-Polyäthylen und ein zweites Polyolefin ist, das weder Polyäthylen noch Polypropylen aufweist.

6. Mikroporöse Polyolefinmembran nach einem der Ansprüche 1 bis 5, wobei das Polyäthylen aufweist:
Ultrahochmolekulargewichts-Polyäthylen mit einem gewichtsgemittelten Molekulargewicht von mindestens 5 x 10⁵, und
hochdichtes Polyäthlyen mit einem gewichtsgemittelten Molekulargewicht von mindestens 1 x 10⁴ aber weniger als 5 x 10⁵.

7. Mikroporöse Polyolefinmembran nach einem der Ansprüche 1 bis 5, wobei das Polyäthylen hochdichtes Polyäthlyen mit einem gewichtsgemittelten Molekulargewicht von mindestens 1 x 10⁴ aber weniger als 5 x 10⁵ aufweist.

8. Verfahren zum Herstellen einer mikroporösen Polyolefinmembran, in dem:
(1) eine Polyolefinlösung aus einer Düse extrudiert wird, wobei die Polyolefinlösung ein Membranformungs-Lösemittel und eine Polyolefinzusammensetzung mit Polyäthylen und Polypropylen aufweist, der Anteil von Polypropylen in der Polyolefinzusammensetzung zwischen 30 und 70 Massen-% basierend auf der Masse der Polyolefinzusammensetzung beträgt, das Polypropylen ein gewichtsgemitteltes Molekulargewicht von mindestens 6 x 10⁵ und eine Fusionswärme von mindestens 90 J/g aufweist, und wenigstes 10 Massen-% des Polypropylens ein Molekulargewicht von mindestens 1,8 x 10⁶ basierend auf der Gesamtmasse des Polypropylens aufweist;
(2) das erhaltene Extrudat gekühlt wird, um eine gelartige Folie zu bilden; und
(3) das Membranformungs-Lösemittel gedehnt und entfernt wird, um die mikroporöse Polyolefinmembran zu bilden, wobei die mikroporöse Polyolefinmembran eine Schmelztemperatur im Bereich von 170 bis 190°C aufweist.

9. Verfahren nach Anspruch 8, wobei in dem Schritt (3)
das Membranformungs-Lösemittel entfernt wird, nachdem die gelartige Folie gedehnt wurde,
die gelartige Folie gedehnt wird, nachdem das Membranformungs-Lösemittel entfernt wurde, oder
das Dehnen der gelartigen Folie und das Entfernen des Membranformungs-Lösemittels in dieser Reihenfolge durchgeführt werden und dann die gelartige Folie gedehnt wird.

10. Batterieseparator mit der mikroporösen Membran nach einem der Ansprüche 1 bis 7.

11. Batterie mit einer Kathode, einer Anode, einem Elektrolyten und wenigstens einem Separator, der eine mikroporöse Membran nach einem der Ansprüche 1 bis 7 aufweist.

12. Verfahren zum Herstellen einer Batterie, in dem:
die Schritte (1) bis (3) des Verfahrens gemäß Anspruch 8 ausgeführt werden, um eine mikroporöse Polyolefinmembran zu bilden;
(4) eine folienartige Schichtstruktur gebildet wird, die aufweist: (a) eine erste Schicht oder eine Kathodenschicht, (b) eine dritte Schicht oder eine Anodenschicht, (c) eine zweite Schicht oder eine erste Separatorschicht, die zwischen und benachbart zu der ersten Schicht und/oder der dritten Schicht liegt, wobei die zweite Schicht die mikroporöse Polyolefinmembran aufweist, und (d) eine vierte Schicht, die eine Außenschicht der folienartigen Schichtstruktur darstellt und eine zweite Separatorschicht aufweist, die benachbart zu der ersten Schicht oder der dritten Schicht liegt;
(5) die folienartige Schichtstruktur längs ihrer längsten Achse gewickelt wird, um einen Elektrodenaufbau zu bilden; und
(6) die erste Schicht und/oder die dritte Schicht geladen und die zweite Schicht mit einem Elektrolyten getränkt wird, um eine Batterie zu bilden.

13. Elektrische Leistungsquelle mit der Batterie nach Anspruch 11.

## Revendications

1. Membrane de polyoléfine microporeuse qui comprend un polyéthylène et un polypropylène, le polypropylène ayant un poids moléculaire moyen de 6 x 10⁵ ou plus, **caractérisé en ce que**
au moins 10 % en masse du polypropylène a un poids moléculaire égal ou supérieur à 1,8 x 10⁶ sur la base de la masse totale de polypropylène,
le polypropylène a une chaleur de fusion de 90 J/g ou plus,
la quantité de polypropylène va de 30 à 70 % en masse, sur la base de la masse de la membrane de polyoléfine microporeuse,
la membrane de polyoléfine microporeuse a une température de fusion dans la gamme de 170 à 190°C.

2. Membrane de polyoléfine microporeuse selon la revendication 1, dans laquelle le polypropylène a un poids moléculaire moyen de 8 x 10⁵ ou plus.

3. Membrane de polyoléfine microporeuse selon la revendication 1 ou 2, dans laquelle le polypropylène comporte 10,5 % ou plus en masse d'une fraction ayant un poids moléculaire de 1,8 x 10⁶ ou plus, tel que déterminé à partir d'une distribution de poids moléculaires.

4. Membrane de polyoléfine microporeuse selon l'une quelconque des revendications 1 à 3, dans laquelle le polypropylène a une chaleur de fusion de 95 J/g ou plus.

5. Membrane de polyoléfine microporeuse selon l'une quelconque des revendications 1 à 4, dans laquelle le polyéthylène est
(a) un polyéthylène de poids moléculaire ultra élevé ayant un poids moléculaire moyen de 5 x 10⁵ ou plus,
(b) un deuxième polyéthylène ayant un poids moléculaire moyen inférieur à celui du polyéthylène de poids moléculaire ultra élevé,
(c) le polyéthylène de poids moléculaire ultra élevé et le deuxième polyéthylène, ou
(d) le polyéthylène de poids moléculaire ultra élevé et une deuxième polyoléfine qui ne comprend ni polyéthylène ni polypropylène.

6. Membrane de polyoléfine microporeuse selon l'une quelconque des revendications 1 à 5, dans laquelle le polyéthylène comprend
un polyéthylène de poids moléculaire ultra élevé ayant un poids moléculaire moyen de 5 x 10⁵ ou plus, et
un polyéthylène de haute densité ayant un poids moléculaire moyen de 1 x 10⁴ ou plus mais inférieur à 5 x 10⁵.

7. Membrane de polyoléfine microporeuse selon l'une quelconque des revendications 1 à 5, dans laquelle le polyéthylène comprend un polyéthylène de haute densité ayant un poids moléculaire moyen de 1 x 10⁴ ou plus mais inférieur à 5 x 10⁵.

8. Méthode de fabrication d'une membrane de polyoléfine microporeuse comprenant :
(1) l'extrusion d'une solution de polyoléfine à partir d'une filière, dans laquelle la solution de polyoléfine comprend un solvant formant une membrane, et une composition de polyoléfine incluant un polyéthylène et un polypropylène, la quantité de polypropylène dans la composition de polyoléfine allant de 30 à 70 % en masse, sur la base de la masse de la composition de polyoléfine, le polypropylène ayant un poids moléculaire moyen de 6 x 10⁵ ou plus et une chaleur de fusion de 90 J/g ou plus ; dans laquelle au moins 10 % en masse du polypropylène a un poids moléculaire égal ou supérieur à 1,8 x 10⁶ sur la base de la masse totale de polypropylène ;
(2) le refroidissement de l'extrudat résultant pour former une feuille de type gel ; et
(3) l'étirement et le retrait du solvant formant une membrane afin de former la membrane de polyoléfine microporeuse, dans laquelle la membrane de polyoléfine microporeuse a une température de fusion dans la gamme de 170 à 190°C.

9. Méthode selon la revendication 8, dans laquelle l'étape (3) consiste à
retirer le solvant formant la membrane après l'étirement de la feuille de type gel,
étirer la feuille de type gel après avoir éliminé le solvant formant une membrane, ou
réaliser l'étirement de la feuille de type gel et l'élimination du solvant formant la membrane dans cet ordre, puis étirer la feuille de type gel.

10. Séparateur de batterie comprenant la membrane microporeuse de l'une quelconque des revendications 1 à 7.

11. Batterie comprenant une cathode, une anode, un électrolyte, et au moins un séparateur qui comprend une membrane microporeuse de l'une quelconque des revendications 1 à 7.

12. Méthode pour fabriquer une batterie comprenant :
les étapes (1) à (3) de la méthode selon la revendication 8 afin de former une membrane microporeuse de polyoléfine ;
(4) la formation d'une structure en couche de type feuille comprenant (a) une première couche ou couche de cathode, (b) une troisième couche ou couche d'anode, (c) une deuxième couche ou première couche séparatrice située entre et à proximité des première et/ou troisième couches, la deuxième couche comprenant la membrane microporeuse de polyoléfine, et (d) une quatrième couche constituant une couche externe de la structure en couche de type feuille comprenant une deuxième couche séparatrice située à proximité de la première ou de la troisième couche ;
(5) l'enroulement de la structure en couche de type feuille selon son axe le plus long pour former un assemblage d'électrode ; et
(6) le chargement de la première et/ou deuxième couche et l'imprégnation de la deuxième couche avec un électrolyte pour constituer une batterie.

13. Source de courant électrique comprenant la batterie selon la revendication 11.
